# FASCICULE DE BREVET EUROPEEN

(11) **EP 1 827 186 B1**
(45) Date de publication et mention de la délivrance du brevet: **23.04.2008**
(21) Numéro de dépôt: 05817030.9
(22) Date de dépôt: 09.11.2005
(51) Int. Cl.: A47J 37/06

(54) **BARBECUE ELECTRIQUE A REFLECTEUR FLOTTANT**
ELEKTRISCHER GRILL MIT SCHWIMMREFLEKTOR
FLOATING REFLECTOR FOR ELECTRICAL BARBECUE

(30) Priorité: 16.11.2004 FR 0412163
(43) Date de publication de la demande: 05.09.2007
(73) Titulaire: SEB SA, 69130 Ecully (FR)
(72) Inventeur: DAUVERGNE, François, F-74600 Seynod (FR); SIMOND, Thierry, F-73360 Saint Pierre de Genebroz (FR); LEQUY, David, F-73000 Chambery-Le-Vieux (FR)
(74) Mandataire: Lemoine, Jean-Sébastien
(86) Numéro de dépôt international: PCT/FR2005/002798
(87) Numéro de publication internationale: WO 2006/053964

(56) Documents cités:
- EP-A- 0 928 589
- FR-A- 2 670 274
- US-A- 5 504 295
- US-A1- 2001 045 422
- US-B1- 6 252 204

## Description

L'invention concerne un barbecue électrique comprenant un réflecteur flottant.

On connaît un barbecue électrique du type comprenant une cuve, une grille de cuisson, un dispositif électrique de chauffe adapté à cuire un aliment disposé sur la grille, et un réflecteur adapté à flotter dans la cuve et à réfléchir vers la grille l'énergie thermique émise par le dispositif électrique de chauffe en direction du fond de la cuve.

Toutefois du fait de l'utilisation de l'acier émaillé pour réaliser la cuve, un tel barbecue est lourd et donc difficilement manipulable et a un coût de fabrication relativement élevé. En outre la cuve est sensible aux moindres chocs qui peuvent la marquer ou la déformer et transmet très facilement la chaleur, ce qui peut causer des brûlures à un utilisateur la touchant par inadvertance quand le barbecue est utilisé. Par ailleurs, du fait de l'utilisation de cette matière, il est nécessaire d'employer d'autres matériaux pour réaliser les poignées de préhension, ce qui entraîne notamment des opérations de fixation de ces poignées à la cuve.

Le problème posé est de réaliser un barbecue électrique ne présentant les différents inconvénients pré-cités, la cuve devant ne pas être dégradée par l'énergie thermique émise par le dispositif électrique de chauffe.

Selon la présente invention, la cuve est faite en matière plastique et les parois latérales du réflecteur s'étendent verticalement au moins jusqu'au sommet des parois latérales de la cuve.

Comme les parois latérales du réflecteur s'étendent verticalement au moins jusqu'au sommet des parois latérales de la cuve, ces dernières sont protégées du rayonnement thermique émis par le dispositif électrique de chauffe, ce qui autorise l'utilisation d'une matière plastique qui rend la cuve thermiquement et électriquement isolante, lui permet d'absorber des chocs sans être marquée ou déformée, d'être particulièrement légère, de ne pas avoir une surface intérieure qui rouille, et d'être fabriqué à un faible coût. De plus, il est particulièrement facile d'avoir une gamme de cuve ayant des formes et des couleurs différentes.

D'autres particularités et avantages de la présente invention apparaîtront dans la description détaillée du mode de réalisation donné à titre d'exemple non limitatif et illustré par les dessins annexés.
La figure 1 est une vue de dessus d'un barbecue conforme à la présente invention,
La figure 2 est une vue en perspective explosée d'un barbecue électrique conforme à la présente invention, le dispositif de chauffe n'étant pas représenté,
La figure 3 est une vue en perspective du barbecue, la grille de cuisson n'étant pas représentée,
La figure 4 est une vue en perspective de la cuve du barbecue,
La figure 5 est une vue en coupe d'une partie du barbecue conforme à la présente invention, illustrant la coopération entre les différents éléments constitutifs, la grille étant verrouillée à la cuve, et
La figure 6 est une vue similaire à la figure 5, la grille étant déverrouillée.

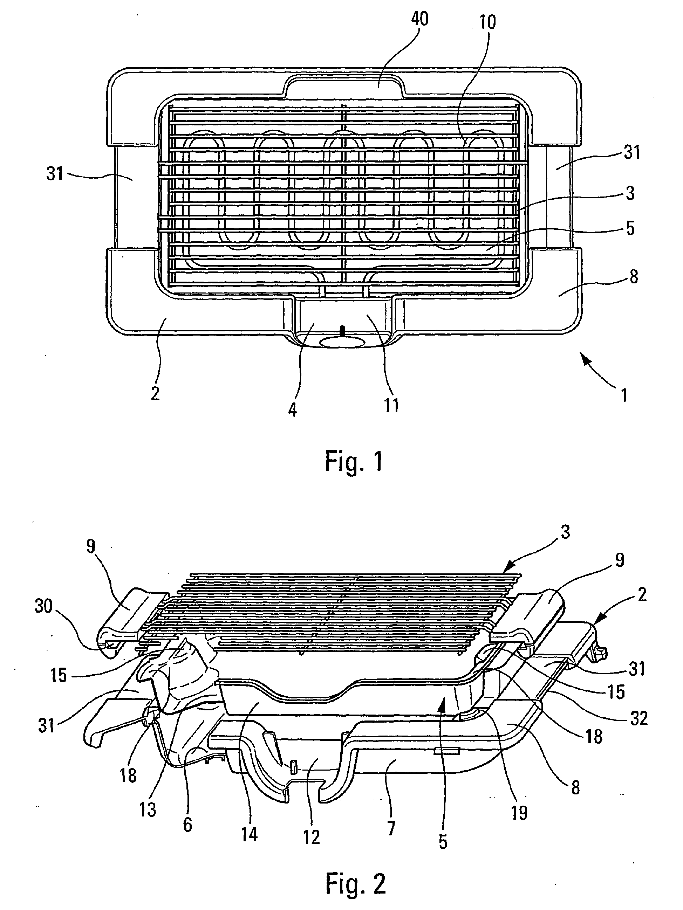

Comme on peut le voir à la figure 1, un barbecue électrique 1 adapté à cuire un aliment comprend une cuve 2, une grille de cuisson 3, un dispositif électrique de chauffe 4 et un réflecteur 5.

La cuve 2, adaptée à contenir de l'eau, sert de corps principal au barbecue 1 et, dans le présent mode de réalisation, elle est de forme parallélépipédique avec une paroi de fond 6 et des parois latérales 7 dont les extrémités libres définissant une ouverture pour le remplissage et la vidange.

La cuve 2 est réalisée en matière plastique, ce matériau présentant les avantages, par rapport à de l'acier émaillé, d'assurer une certaine isolation thermique et de protéger en conséquence un utilisateur de toute brûlure par contact d'une de ses parois quand le barbecue 1 est utilisé, d'assurer une isolation électrique, et de pouvoir absorber des chocs sans être marquée ou déformée. De plus, la cuve 2 ne peut pas rouiller et son nettoyage est particulièrement facile.

Un autre avantage d'un tel matériau est qu'il est possible d'intégrer à la cuve 2 des moyens de préhension permettant sa manipulation. A cet effet, dans le présent exemple, les parois latérales 7 sont prolongées, au niveau de leur extrémité libre, par des parois sensiblement horizontales saillantes vers l'extérieur, formant un rebord périphérique 8 qui borde l'ouverture et qui permet la manipulation de la cuve 2.

De préférence, la matière plastique utilisée pour la cuve 2 est du polypropylène.

La grille de cuisson 3 est adaptée à recevoir l'aliment à cuire. Dans le présent mode de réalisation, des poignées 9 sont solidarisées à la grille 3 et permettent sa manipulation indépendamment de la cuve 2. Quand le barbecue 1 est dans sa configuration de fonctionnement, la grille 3 est disposée au-dessus de l'ouverture de la cuve 2, les poignées 9 prenant appui contre le rebord périphérique 8 de cette dernière.

De plus, dans le présent mode de réalisation, les poignées 9 sont conformées de façon à permettre la solidarisation et la séparation de la grille 3 à la cuve 2.

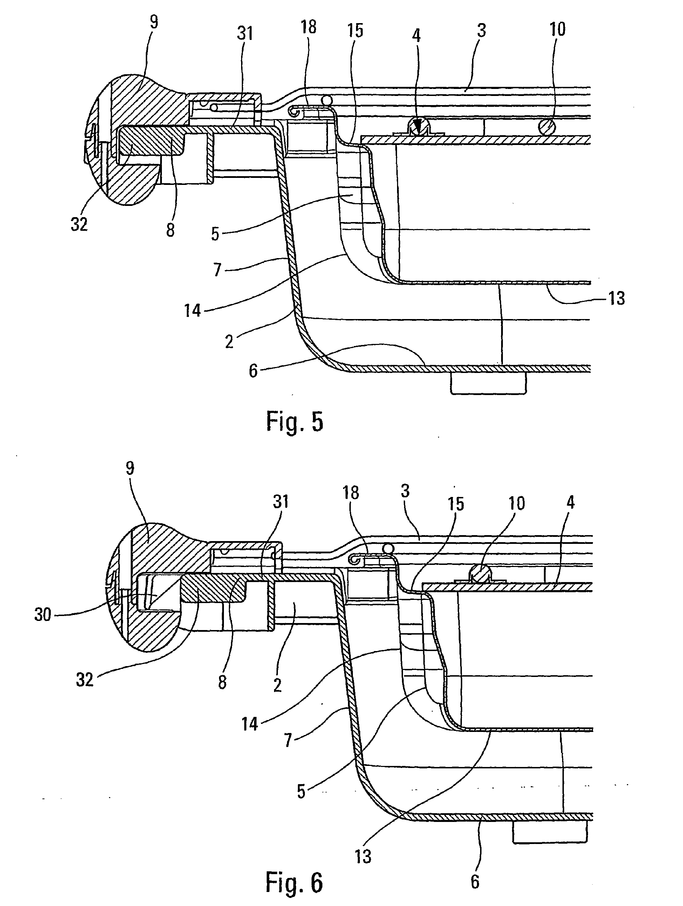

A cet effet, et comme on peut le voir aux figures 5 et 6, les poignées 9 sont montées mobiles par rapport à la grille 3. Dans le présent mode de réalisation, ces poignées sont mobiles en translation entre une position de verrouillage (cf. figure 5) et une position de déverrouillage (cf. figure 6). Le rebord périphérique 8 comprend, au niveau de ses parties 31 sur lesquelles les poignées 9 sont adaptées à reposer, une extrémité libre 32. Chaque poignée 9 comprend une cavité 30 dans laquelle l'extrémité libre 32 correspondante est adaptée à pénétrer quand la poignée 9 est dans sa position de verrouillage. Quand une poignée 9 est dans sa position de déverrouillage, l'extrémité libre 32 est dégagée hors de la cavité 30 de manière à permettre le déplacement de la grille 3.

Le dispositif électrique de chauffe 4 est adapté à cuire l'aliment posé sur la grille de cuisson 3. Il comprend une résistance électrique de chauffe 10 et un boîtier de connexion électrique 11 dans lequel sont situés les différents éléments permettant l'alimentation et la régulation de la résistance 10.

Quand le barbecue 1 est dans sa configuration d'utilisation, la résistance électrique 10 est située sous la grille de cuisson 3, le dispositif électrique de chauffe 4 étant supporté par la cuve 2 par l'intermédiaire du boîtier de connexion 11 disposé dans un logement 12 réalisé sur la face extérieure d'une paroi latérale 7 de la cuve 2.

Le réflecteur 5 est adapté à flotter dans la cuve, à recevoir les graisses et jus de cuisson tombant de l'aliment posé sur la grille de cuisson 3, et à réfléchir, vers la grille de cuisson 3, le rayonnement thermique émis par la résistance électrique de chauffe 10 en direction des parois de la cuve 2. Dans le présent mode de réalisation, il est de forme parallélépipédique avec une paroi de fond 13 et des parois latérales 14 dont les extrémités libres définissant une ouverture.

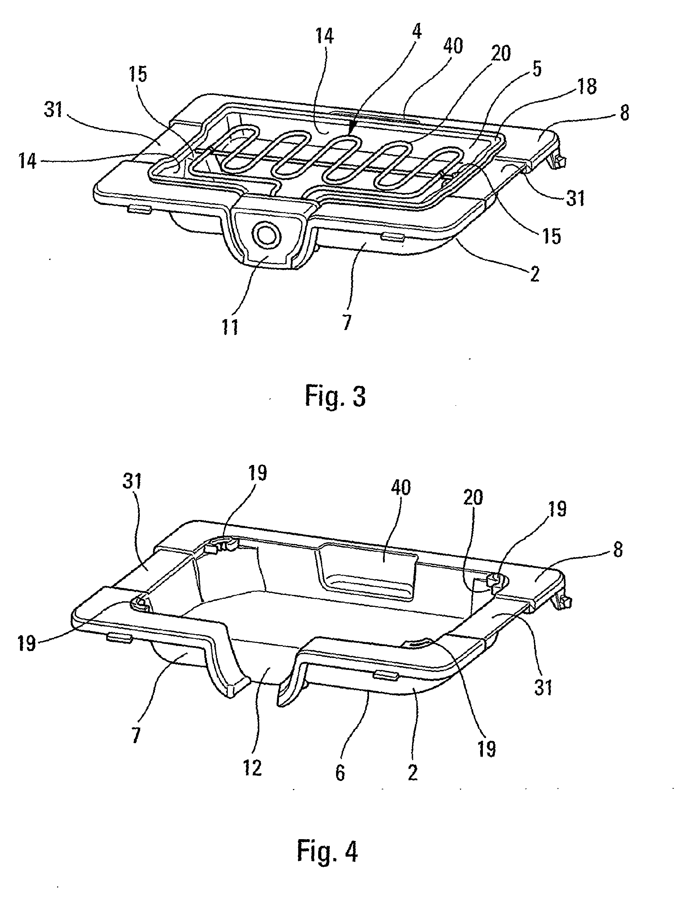

Dans le présent mode de réalisation, et comme on peut le voir aux figures 3, 5 et 6, afin d'empêcher tout rayonnement thermique d'atteindre la cuve 2 et de limiter ainsi l'échauffement de cette dernière, le réflecteur 5 est conformé de sorte qu'il soit interposé, quand le barbecue 1 est en configuration d'utilisation, entre toute partie de la cuve 2 et toute partie de la résistance électrique 10. Afin d'assurer cette protection, dans le présent mode de réalisation, quand le barbecue 1 est dans sa configuration d'utilisation, les parois latérales 14 du réflecteur 5 s'étendent verticalement au moins jusqu'à l'ouverture de la cuve 2.

Par ailleurs, dans le présent mode de réalisation, et comme on peut le voir à la figure 3, notamment afin de protéger le rebord périphérique 8 de la cuve 2, la résistance électrique 10 est située sous l'ouverture du réflecteur 5 (et donc dans le réflecteur). Afin de soutenir la résistance électrique 10, le réflecteur 5 comprend deux ergots 15 faisant saillie de ses parois latérales 14, vers l'intérieur. Ces deux ergots 15, en supportant la résistance électrique 10 quand le barbecue 1 est dans sa configuration d'utilisation, sont adaptés à empêcher le pivotement du boîtier de connexion 11 dans une position coupant l'alimentation de la résistance électrique 10.

Egalement dans le but de protéger la cuve 2 de tout rayonnement thermique, dans le présent mode de réalisation, le réflecteur 5 est conformé de sorte qu'il soit interposé, quand le barbecue 1 est en configuration d'utilisation, entre toute partie de la cuve 2 et toute partie de la grille de cuisson 3, cette dernière, chauffée par la résistance électrique 10, émettant également un rayonnement thermique. Les parois latérales 14 du réflecteur 5 sont prolongées, au niveau de leur extrémité libre, par un rebord périphérique 18 qui est adapté, quand le barbecue 1 est dans sa configuration d'utilisation, à recevoir la périphérie de la grille de cuisson 3 (plus exactement, la poussée exercée par l'eau sur le réflecteur 5 le soulève jusqu'à ce que son rebord périphérique 18 vienne en butée contre la grille 3 solidarisée à la cuve 2 par l'intermédiaire des poignées 9). Comme on peut parfaitement le voir aux figures 5 et 6, l'extrémité libre du rebord périphérique est roulé, ce qui permet de conférer à cette dernière une plus grande rigidité.

Par ailleurs, afin de protéger la cuve 2 de tout contact avec le réflecteur thermique 5, le barbecue 1 comprend des moyens de guidage 19 adaptés à maintenir les parois latérales 14 du réflecteur 5 à une distance comprise entre 5 et 10 mm des parois latérales 7 de la cuve 2. Dans le présent exemple, comme on peut le voir à la figure 4, ces moyens de guidage 19 sont formés par des plots 19 réalisés dans une matière résistant à une forte température, par exemple en bakélite. Ces plots 19 sont fixés à la cuve 2 au niveau des angles formés entre deux parois latérales 7 adjacentes et permettent de centrer correctement le réflecteur 5 dans la cuve 2. Ils ont une forme sensiblement égale à un U, la cavité 20 définie par les deux branches du U recevant une arrête du réflecteur. De ce fait, le réflecteur 5 n'est libre de mouvement que selon la direction verticale.

Ainsi, la mise en place du barbecue décrit dans le présent mode de réalisation est particulièrement simple. Le réflecteur 5 est introduit dans la cuve 2, guidé par les plots 19. Ensuite, le boîtier 11 du dispositif électrique de chauffe 4 est disposé dans son logement 12, la résistance 10 reposant sur les ergots 15. Si le réflecteur 5 n'est pas mis en place, le boîtier 11 pivote dans une position coupe circuit. La grille 3 est ensuite fixée à la cuve 2 par l'intermédiaire des poignées 19. Enfin, de l'eau est introduite dans la cuve 2 par une ouverture 40 qui est située entre la cuve 2 et le réflecteur 5, à l'arrière du barbecue 1. Le réflecteur 5 est soulevé jusqu'à venir en butée contre la grille 3, position qui correspondant à la configuration d'utilisation du barbecue 1.

Le fait d'utiliser un réflecteur 5 dont les dimensions, dans le plan de son ouverture, sont inférieures à celles correspondantes de la cuve 2 que de quelques millimètres, et dont la configuration permet de renvoyer vers la grille 3 la partie du rayonnement émise sous la résistance 10, permet d'augmenter considérablement la surface réfléchie et donc d'avoir un rapport de la consommation électrique sur la surface de la grille de cuisson particulièrement élevé. Ainsi, à consommation égale par rapport à un barbecue électrique de l'état de la technique, il est possible d'augmenter la surface de cuisson. A contrario, à surface de cuisson égale, le barbecue a une consommation électrique réduite.

De nombreuses modifications peuvent être apportées. Ainsi, le réflecteur peut avoir un fond comportant des dépressions formant des zones de collecte des graisses et jus de cuisson, le reste du fond restant relativement propre et assurant une bonne réflexion malgré la réception de ces liquides.

## Revendications

1. Barbecue électrique (1) comprenant une cuve (2) adaptée à contenir de l'eau, une grille de cuisson (3) adaptée à recevoir un aliment à cuire, un dispositif électrique de chauffe (4) adapté à cuire l'aliment, et un réflecteur (5) adapté à flotter dans la cuve (2) et à réfléchir vers la grille (3) l'énergie thermique émise par le dispositif électrique (4) en direction du fond de la cuve (2), **caractérisé en ce que** la cuve (2) est faite en matière plastique, les parois latérales (14) du réflecteur (5) s'étendant verticalement au moins jusqu'au sommet des parois latérales (7) de la cuve (2).

2. Barbecue (1) selon la revendication 1, **caractérisé en ce que**, quand il est en configuration d'utilisation, le réflecteur (5) est conformé de manière à être interposé entre toute partie de la cuve (2) et toute partie de la résistance électrique (10) du dispositif de chauffe (4).

3. Barbecue (1) selon la revendication 1 ou 2, **caractérisé en ce que**, quand il est en configuration d'utilisation, le réflecteur (5) est conformé de manière à être interposé entre toute partie de la cuve (2) et toute partie de la grille de cuisson (3).

4. Barbecue (1) selon l'une des revendications 1 à 3, **caractérisé en ce que** le réflecteur (5) comprend, au niveau de son ouverture, un rebord périphérique (18) adapté à recevoir la bordure de la grille de cuisson (3) quand le barbecue (1) est dans sa configuration d'utilisation.

5. Barbecue (1) selon la revendication 4, **caractérisé en ce que** l'extrémité libre du rebord périphérique (18) est roulé.

6. Barbecue (1) selon l'une des revendications 1 à 5, **caractérisé en ce qu'**il comprend des moyens de guidage (19) adaptés à conférer au réflecteur (5) une liberté de mouvement limitée à la direction verticale.

7. Barbecue (1) selon l'une des revendications 1 à 6, **caractérisé en ce qu'**il comprend des moyens de guidage (19) adaptés à maintenir les parois latérales (14) du réflecteur (5) à une distance comprise entre 5 et 10 mm des parois latérales (7) de la cuve (2).

8. Barbecue (1) selon la revendication 6 ou 7, **caractérisé en ce que** les moyens de guidage (19) sont formés par des plots (19) en bakélite fixés à la cuve (2) au niveau des angles formés par deux parois latérales (7) adjacentes.

9. Barbecue (1) selon l'une des revendications 1 à 8 **caractérisé en ce que** le réflecteur (5) comprend deux ergots (15) qui font saillie de ses parois latérales (14) vers l'intérieur, et qui sont adaptés à supporter la résistance électrique (10) du dispositif de chauffe (4) quand le barbecue (1) est dans sa configuration d'utilisation.

10. Barbecue selon l'une des revendications 1 à 9, **caractérisé en ce que** des poignées (9) sont solidarisées à la grille (3) et sont mobiles par rapport à celle-ci entre une position de verrouillage dans laquelle la grille (3) est verrouillée à la cuve (2), et une position de déverrouillage.

## Claims

1. Electrical barbecue (1) including a pan (2) suitable for containing water, a cooking grill (3) suitable for receiving a food item to be cooked, an electrical heating device (4) suitable for cooking the food item, and a reflector (5) designed to float inside the pan (2) and to reflect towards the grill (3) the heat energy emitted by the electrical device (4) towards the bottom of the pan (2), **characterised in that** the pan (2) is made of a plastic material, the side walls (14) of the reflector (5) extending vertically at least up to the top of the side walls (7) of the pan (2).

2. Barbecue (1) as claimed in claim 1, **characterised in that**, when it is in its configuration for use, the reflector (5) is shaped so as to be interposed between every portion of the pan (2) and every portion of the electric resistance (10) of the heating device (4).

3. Barbecue (1) as claimed in claim 1 or 2, **characterised in that**, when it is in its configuration for use, the reflector (5) is shaped so as to be interposed between every portion of the pan (2) and every portion of the cooking grill (3).

4. Barbecue (1) as claimed in one of claims 1 to 3, **characterised in that** the reflector (5) includes, at its opening, a peripheral rim (18) designed to receive the edge of the cooling grill (3) when the barbecue (1) is in its configuration for use.

5. Barbecue (1) as claimed in claim 4, **characterised in that** the free end of the peripheral rim (18) is rolled over.

6. Barbecue (1) as claimed in one of claims 1 to 5, **characterised in that** it includes guide means (19) designed to give the reflector (5) limited freedom of movement in the vertical direction.

7. Barbecue as claimed in one of claims 1 to 6, **characterised in that** it includes guide means (19) designed to hold the side walls (14) of the reflector (5) at distance of between 5 and 10 mm from the side walls (7) of the pan (2).

8. Barbecue (1) as claimed in claim 6 or 7, **characterised in that** the guide means (19) are formed by Bakelite studs (19) fastened to the pan (2) at corners formed by two adjacent side walls (7).

9. Barbecue (1) as claimed in one of claims 1 to 8, **characterised in that** the reflector (5) includes two lugs (15) which project inwardly from its side walls (14), and which are designed to support the electrical resistance (10) of the heating device (4), when the barbecue (1) is in its configuration for use.

10. Barbecue as claimed in one of claims 1 to 9, **characterised in that** handles (9) are fastened firmly to the grill (3) and are movable in relation thereto, between a locking position, in which the grill (3) is locked to the pan (2), and an unlocking position.

## Patentansprüche

1. Elektrischer Grill (1) mit Wanne (2), die Wasser enthalten kann, einem Bratrost (3), auf den ein zu bratendes Lebensmittel gelegt werden kann, einer elektrischen Heizeinrichtung (4), mit der das Lebensmittel gebraten werden kann, und einem Reflektor (5), der in der Wanne (2) schwimmen und in Richtung des Rostes (3) die von der elektrischen Einrichtung (4) in Richtung des Bodens der Wanne (2) abgegebene Wärmeenergie reflektieren kann, **dadurch gekennzeichnet, dass** die Wanne (2) aus einem Kunststoffmaterial hergestellt ist, wobei sich die Seitenwände (14) des Reflektors (5) in vertikaler Richtung wenigstens bis zum Scheitelpunkt der Seitenwände (7) der Wanne (2) erstrecken.

2. Grill (1) nach Anspruch 1, **dadurch gekennzeichnet, dass**, wenn sich dieser in einer Benutzungskonfiguration befindet, der Reflektor (5) derart ausgebildet ist. dass dieser zwischen dem gesamten Bereich der Wanne (2) und dem gesamten Bereich des elektrischen Widerstands (10) der Heizeinrichtung (4) angeordnet ist.

3. Grill (1) nach Anspruch 1 oder 2, **dadurch gekennzeichnet, dass**, wenn sich dieser in einer Benutzungskonfiguration befindet, der Reflektor (5) derart ausgebildet ist, dass sich dieser zwischen dem ganzen Bereich der Wanne (2) und dem ganzen Bereich des Bratrostes (3) angeordnet ist.

4. Grill (1) nach einem der Ansprüche 1 bis 3, **dadurch gekennzeichnet, dass** der Reflektor (5) an seiner Öffnung eine Umfangskante (18) aufweist, die den Rand des Bratrostes (3) aufnehmen kann, wenn sich der Grill (1) in seiner Benutzungskonfiguration befindet.

5. Grill (1) nach Anspruch 4, **dadurch gekennzeichnet, dass** das freie Ende der Umfangskante (18) rund gebogen ist.

6. Grill (1) nach einem der Ansprüche 1 bis 5, **dadurch gekennzeichnet, dass** dieser eine Führungseinrichtung (19) umfasst, die dem Reflektor (5) eine in vertikaler Richtung begrenzte Bewegungsfreiheit verleihen kann.

7. Grill (1) nach einem der Ansprüche 1 bis 6, **dadurch gekennzeichnet, dass** dieser eine Führungseinrichtung (19) umfasst, die die Seitenwände (14) des Reflektors (5) in einem Abstand zwischen 5 und 10 mm von den Seitenwänden (7) der Wanne (2) halten kann.

8. Grill (1) nach Anspruch 6 oder 7, **dadurch gekennzeichnet, dass** die Führungseinrichtung (19) durch Steckstellen (19) aus Bakelit gebildet sind, die an der Wanne (2) an den durch zwei benachbarte Seitenwände (7) gebildeten Winkeln befestigt sind.

9. Grill (1) nach einem der Ansprüche 1 bis 8, **dadurch gekennzeichnet, dass** der Reflektor (5) zwei Vorsprünge (15) umfasst, die von seinen Seitenwänden (14) nach innen abstehen und die den elektrischen Widerstand (10) der Heizeinrichtung (4) halten können, wenn sich der Grill (1) in seiner Benutzungskonfiguration befindet.

10. Grill nach einem der Ansprüche 1 bis 9, **dadurch gekennzeichnet, dass** Griffe (9) fest mit dem Rost (3) verbunden sind und in Bezug zu diesem zwischen einer Verriegelungsposition, in welcher der Rost (3) mit der Wanne (2) verriegelt ist, und einer Entriegelungsposition beweglich sind.
